# EUROPÄISCHE PATENTANMELDUNG

(11) **EP 1 669 882 A2**
(43) Veröffentlichungstag der Anmeldung: **14.06.2006**
(21) Anmeldenummer: 05026052.0
(22) Anmeldetag: 30.11.2005
(51) Int. Cl.: G06F 13/42

(54) **Verfahren zur erweiterten Nutzung einer IIC-Bus-Signal-Leitung**

(30) Priorität: 06.12.2004 AT 20432004
(71) Anmelder: Vaillant GmbH, 42859 Remscheid (DE)
(72) Erfinder: Fassbender, Hubert, 41352 Korschenbroich (DE); Grüneberg, Richard, 42283 Wupertal (FR); Klepka, Michael, 42369 Wuppertal (DE)
(74) Vertreter: Hocker, Thomas

(57) **Zusammenfassung**

Verfahren zur erweiterten Nutzung einer IIC-Bus-Signal-Leitung (1). Zusätzlich zur Datenübertragung zwischen einem Sender (6) und einem Empfänger (7) wird die IIC-Bus-Signal-Leitung (1) genutzt, um außerdem einen oder mehrere Schalter zu betätigen.

## Beschreibung

Die Erfindung bezieht sich auf ein Verfahren zur erweiterten Nutzung einer IIC-Bus- Signal-Leitung. Derartige IIC-Bus-Signal-Leitungen bestehen aus einer IIC-Bus-Clock-Signal-Leitung, kurz SCL-Leitung, sowie aus einer IIC-Bus-Data-Signal-Leitung, kurz SDA-Leitung, und werden zur Datenübertragung als Verbindung zwischen einem oder mehreren Sendern, vorzugsweise einer Steuereinheit, und einem oder mehreren Empfängern eingesetzt.

In Heizgeräten werden IIC-Bus-Signal-Leitungen als Verbindung zwischen der Steuereinheit des Heizgerätes und weiteren elektronischen Bauteilen des Heizgerätes, beispielsweise Sensoren, verwendet.

IIC-Bus-Signal-Leitungen gemäß dem Stand der Technik werden ausschließlich zur seriellen Datenübertragung zwischen einer oder mehreren Steuereinheiten und einem oder mehreren Empfängern, beispielsweise einem Chip mit IIC-Bus-Dekoder, verwendet. Jeder IIC-Bus Empfänger ist adressierbar und über eine eigene Adresse ansprechbar ohne, dass andere Empfänger beeinflusst werden. Der Nachteil besteht darin, dass zusätzliche Empfänger immer einen IIC-Bus-Dekoder benötigen.

Der Erfindung liegt die Aufgabe zugrunde, ein Verfahren zur erweiterten Nutzung einer IIC-Bus-Signal-Leitung zu schaffen, bei dem die IIC-Bus-Signal-Leitung nicht nur als Verbindung zwischen IIC-Bus Steuereinheit und IIC-Bus Empfänger genutzt wird, sondern bei dem die IIC-Bus-Signal-Leitung zusätzlich noch zur Ansteuerung eines oder mehrerer Schalter, vorzugsweise Transistoren, verwendet wird.

Die Datenübertragung von einem Sender zu einem Empfänger über eine IIC-Bus-Datenleitung erfolgt durch Impulse. Sowohl die SCL- als auch die SDA-Signal-Leitung übertragen Impulse, die eine High-Level oder einem Low-Level entsprechen. Eine bestimmte Abfolge der High-Level bzw. Low-Level nennt sich Stop-Bedingung, eine ander Start-Bedingung. Bevor der Empfänger mit der Datenverarbeitung beginnt, muß eine bestimmte Datensequenz, nämlich die Start-Bedingung vorliegen. Erst nachdem diese vorliegt, werden Daten verarbeitet. Eine Stop-Bedingung beendet die Datenverarbeitung wieder. Der IIC-Bus ist danach wieder bereit für weitere Übertragungen. Bei dem erfindungsgemäßen Verfahren löst jede Pegeländerung, also die Änderung von High-Level auf Low-Level, ein Umschalten der angeschlossenen Schalter aus. Durch eine zeitlich abgestimmte Datenübertragung durch den Sender kann sichergestellt werden dass es zu keinen Konflikten kommt. Bei einer Datenübertragung zwischen Sender und Emfänger ist das damit verbundene Umschalten der angeschlossenen Schalter für die Gerätefunktion unerheblich. Werden vom Sender die Schalter angesteuert, erfolgt dies immer in Form einer Stop-Bedingung, womit eine Beeinflussung der IIC-Bus-Empfänger vermieden wird.

Die Aufgabe wird mittels eines Verfahrens mit den Merkmalen gemäß des Anspruchs 1 dadurch gelöst, indem die Pegeländerungen der SCL- und SDA-Leitungen, aus denen die IIC-Bus-Signal-Leitung besteht, einerseits zur Datenübertragung und andererseits zur Umschaltung jeweils eines Schalters genutzt werden.

Gemäß den Merkmalen des abhängigen Verfahrensanspruchs 2 soll die direkte Schalteransteuerung geschützt werden.

Gemäß den Merkmalen des abhängigen Anspruchs 3 soll geschützt werden, dass nur eine der Leitungen, aus denen die IIC-Bus-Sinal-Leitung besteht, zur Schalterumschaltung verwendet wird.

### Die Erfindung wird nun anhand der Zeichnungen genauer erläutert. Hierbei zeigen

Fig. 1 eine IIC-Bus-Verbindung gemäß dem Stand der Technik

Fig. 2 eine IIC-Bus-Verbindung mit erweiterter Nutzung.

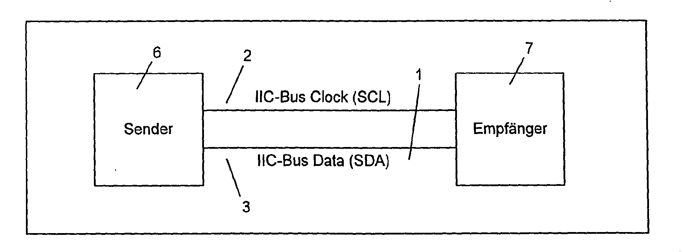

Fig. 1 zeigt eine IIC-Bus-Verbindung gemäß dem Stand der Technik. Ein Sender, beispielsweise eine Steuereinheit (6), ist über eine IIC-Bus-Leitung (1), bestehend aus einer SCL-Leitung (2) und einer SDA-Leitung (3) mit einem Empfänger, beispielsweise einem Sensor (7), verbunden.

Fig. 2 zeigt eine IIC-Bus-Verbindung mit erweiterter Nutzung. Ein Sender, beispielsweise eine Steuereinheit (6) ist über eine IIC-Bus-Leitung (1), bestehend aus einer SCL-Leitung (2) und einer SDA-Leitung (3) mit einem Empfänger, beispielsweise einem Sensor (7), verbunden. Desweiteren ist die SCL-Leitung (2) mit einem Schalter (4) und die SDA-Leitung (3) mit einem Schalter (5) verbunden.

Der Vorteil des beschriebenen Verfahrens besteht darin, daß durch die erweiterte Nutzung einer IIC-Bus-Signal-Leitung Schalter direkt angesteuert werden können und daß dadurch die Notwendigkeit zusätzlicher Bauteile, beispielsweise Steuereinheiten, zur Dekodierung der IIC-Bus-Signale, entfällt.

## Patentansprüche

1. Verfahren zur erweiterten Nutzung einer IIC-Bus-Signal-Leitung (1) zur Datenübertragung zwischen mindestens einem Sender (6) und mindestens einem Empfänger (7), bestehend aus einer SCL-Leitung, also einer IIC-Bus-Clock-Signal-Leitung (2), sowie bestehend aus einer SDA-Leitung, also einer IIC-Bus-Data-Signal-Leitung (3), **dadurch gekennzeichnet, dass** die SCL-Leitung (2) und die SDA-Leitung (3) zusätzlich zur Datenübertragung ebenfalls zur Umschaltung eines Schalters (4) und eines weiteren Schalters (5) genutzt werden, indem jede Pegeländerung der SCL-Leitung (2) und SDA-Leitung (3) die Umschaltung des entsprechend angeschlossenen Schalters bewirkt.

2. Verfahren zur erweiterten Nutzung einer IIC-Bus-Signal-Leitung (1) gemäß Anspruch 1, **dadurch gekennzeichnet, dass** der oder die Schalter direkt angesteuert werden und somit keine zusätzliche Steuereinheit zur Dekodierung erforderlich ist.

3. Verfahren zur erweiterten Nutzung einer IIC-Bus-Signal-Leitung (1) gemäß Anspruch 1 oder 2, **dadurch gekennzeichnet, dass** nur eine der Leitungen, aus denen die IIC-Bus-Signal-Leitung besteht, zur Schalteransteuerung genutzt wird.
